# EUROPEAN PATENT SPECIFICATION

(11) **EP 2 259 496 B1**
(45) Date of publication and mention of the grant of the patent: **23.05.2012**
(21) Application number: 10174977.8
(22) Date of filing: 24.04.2006
(51) Int. Cl.: G08B 25/10, H04W 4/22, H04L 12/28, G08G 1/123, H04M 11/04

(54) **Apparatus, and associated method, for generating an alert to notify emergency personnel of a vehicular emergency**
Gerät und dazugehöriges Verfahren zum Erzeugen eines Notrufs, um einen Hilfsdienst von einer Notsituation eines Fahrzeugs zu unterrichten
Appareil et méthode pour générer un signal de détresse d'un véhicule afin de prévenir les secours

(43) Date of publication of application: 08.12.2010
(62) Divisional of application: 06252194.3
(73) Proprietor: Research In Motion Limited, Waterloo, ON N2L 3W8 (CA)
(72) Inventor: Buckley, Adrian, Tracy, CA 95276 (US); Simmons, Sean, Waterloo, ON N2L 3W8 (CA)
(74) Representative: Fennell, Gareth Charles

(56) References cited:
- US-A1- 2002 137 489
- US-A1- 2004 142 678
- US-A1- 2004 166 828
- US-A1- 2005 096 007
- US-B1- 6 225 944
- US-B1- 6 340 928
- US-B1- 6 493 629
- VEHICLE FUNCTIONALITY WORKING GROUP: "European e-Call functional specifications In Vehicle System" INTERNET CITATION 10 April 2006 (2006-04-10), pages 1-14, XP002553419 Retrieved from the Internet: URL:http://esafetysupport.org/download/eca ll_toolbox/Reports/Appendix_10.pdf [retrieved on 2006-01-01]
- PATENT ABSTRACTS OF JAPAN vol. 2000, no. 26, 1 July 2002 (2002-07-01) -& JP 2001 250183 A (DENSO CORP), 14 September 2001 (2001-09-14)

## Description

The present invention relates generally to a manner by which automatically to alert a public safety access point (PSAP), or other emergency personnel dispatch station, of the occurrence of a vehicular emergency. More particularly, the present invention relates to apparatus, and an associated method, that notifies the PSAP, or other station, of the occurrence with identification of the vehicle and additional information about the vehicular emergency.

A Bluetooth™ or other local area transceiver is mounted at the vehicle. When the vehicular emergency occurs, the local area transceiver communicates with a cellular mobile station, or other wide area transceiver, that also has local area communication capabilities. And, the cellular mobile station, or other wide area transceiver, communicates with the PSAP. Communications between the wide area transceiver and the PSAP are carried out using TTY (text telephony) devices located at the wide area transceiver and at the PSAP, thereby to alert the PSAP of the vehicular emergency.

### Background of the Invention

Advancements in communication technologies have permitted the development and deployment of many new types of communication devices and the introduction of many new tyes of communication services. For instance, the networks of cellular communication systems have been deployed over significant portions of the populated areas of the world. A subscriber to a cellular communication system communicates with the network part of the system through use of a cellular mobile station positioned within a coverage area defined by the network. A radio air interface is defined between the mobile station and the network and radio signals are communicated therebetween by way of the radio air interface.

The network of the cellular communication system is connected to other communication networks, such as a packet data network and a conventional, telephonic network. Communications are thereby effectuable between the mobile station and an endpoint of the data network or telephonic network. Because the mobile station communicates by way of radio signals communicated on the radio air interface, the mobile station need not be positioned at a location at which wireline connections are available to interconnect the mobile station with a communication network. Communication mobility is also permitted of the mobile station as the mobile station is operable free of any fixed connection to a communication network.

Many millions of subscribers make use of cellular communication systems through which to communicate telephonically and to communicate data. Many cellular mobile stations also provide for communications by hearing-impaired users. Such mobile stations include TTY (Text Telephony) elements, typically including TTY modems, that provide for textual entry of data by a user at the mobile station as well as reception of TTY data displayable in visual form for the user of the mobile station.

Use of a cellular communication system through which to communicate provides many conveniences, e.g., permitting subscribers to communicate even when positioned at locations at which wireline connections are unavailable. A subscriber is able to communicate, for instance, when traveling in a motor vehicle. Moreover, cellular communication systems not only provide for convenience, but also are advantageously utilized for purposes of personal and public safety. A subscriber is able to communicate, using a cellular communication system, with emergency personnel, such as those of an emergency dispatch center to request emergency assistance and to report emergency conditions. Emergency dispatch centers, herein referred to, at times, as public safety access points (PSAPs), have equipment and personnel for communicating with those requesting assistance. Such PSAPs also typically include TTY devices to communicate with requesters that utilize TTY devices.

Recent attention has been directed towards manners by which automatically to report vehicular emergencies, e.g., accidents in which airbags are deployed or in which a vehicle is overturned. Automatic reporting ensures that emergency personnel shall be informed of the vehicular emergency, thereby to be able to respond to the emergency. Various problems have heretofore limited the deployment of automated mechanisms in vehicles for the reporting of the vehicular emergencies. While every vehicle can be outfitted with a cellular mobile station that permanently forms part of the vehicle, mobile stations require SIM cards that uniquely identify each mobile station. Outfitting each vehicle with a separate SIM card is impractical due to reasons of cost, lack of availability of IMSI values, and issues regarding recovery of SIM cards when the vehicle is no longer operated.

Furthermore, both documents US 2002/0137489 and US 2004/0142678 disclose the use of a wireless phone to relay an emergency message from a vehicle to a remote centre. Upon occurrence of a vehicular emergency, the wireless phone receives an emergency message from the vehicle over short range communications and relays the message to the remote centre over wide area network.

It is in light of this background information related to emergency reporting of vehicular emergencies making use of a radio communication system that the significant improvements of the present invention have evolved.

### Brief Description of the Drawings

Figure 1 illustrates a functional block diagram of a communication system in which an embodiment of the present invention is operable.

Figure 2 illustrates a functional block diagram illustrating portions of the communication system shown in Figure 1.

Figure 3 illustrates a process diagram representative of operation of an embodiment of the present invention.

Figure 4 illustrates a method flow diagram listing the method of operation of an embodiment of the present invention.

### Detailed Description

The present invention, accordingly, advantageously provides apparatus, and an associated method, by which automatically to alert a PSAP (Public Safety Access Point), or other emergency personnel dispatch station, of the occurrence of a vehicular emergency.

Through operation of an embodiment of the present invention, a manner is provided to notify the PSAP, or other station, of the occurrence with identification of the vehicle and additional information about the vehicular emergency.

In one aspect of the present invention, a Bluetooth™, or other, local area transceiver is mounted at the vehicle. When the vehicular emergency occurs, the local area transceiver communicates with a cellular mobile station or other wide area transceiver that also has local area communication capabilities. And, the cellular mobile station communicates with the PSAP. Communications between the cellular mobile station and the PSAP are carried out using TTY devices located at the cellular mobile station and at the PSAP to alert the emergency personnel of the occurrence of the emergency.

In another aspect of the present invention, the local area transceiver, mounted at the vehicle, searches for the presence of the cellular, or other wide area, transceiver. When such a wide area transceiver having local area communication capabilities is within proximity to the local area transceiver, the local area transceiver obtains an indication of the identity of the local area transceiver. The identity comprises, for instance, an IP (Internet Protocol) address of the local area transceiver positioned together with the cellular mobile station. That is to say, the local area transceiver mounted at the vehicle searches for a paired transceiver, i.e., a transceiver operable to communicate with the vehicular-mounted local area transceiver.

In another aspect of the present invention, the local area transceiver is caused to search for the presence of the cellular mobile station having the local area transceiver capability responsive to a vehicular trip start event. The vehicular trip start event comprises, for instance, the turning of an ignition switch at the vehicle at which the vehicular-positioned local area transceiver is mounted. Or, the vehicular trip start event comprises, e.g., operator actuation of an actuation switch. For instance, a switch positioned at the passenger compartment of the vehicle, available for actuation by a driver of the vehicle is actuated when the driver elects to commence the search operation for the presence of a cellular mobile station having a local area transceiver forming a portion thereof.

In another aspect of the present invention, a storage element, such as an accessible memory location, is used to store the identity of the transceiver identified by the vehicular-positioned local area transceiver. The memory location is later accessed in the event that a report of a vehicular emergency is required. The identity is used to address a message that is sent by the vehicular-mounted local area transceiver to the transceiver identified by the identifier stored at the memory location.

In another aspect of the present invention, the message, once provided to the transceiver identified to be in proximity to the vehicular-mounted transceiver, is communicated to the PSAP using the radio air interface of the cellular communication system and the network parts extending to the PSAP.

In another aspect of the present invention, the indicia are obtained of the identity of the vehicle, such as its VIN (Vehicular Identification Number) and the type of vehicular emergency. The type of vehicular emergency is identified by, e.g., detecting deployment of airbags, detecting overturning of the vehicle, or detection of some other anomaly condition.

In another aspect of the present invention, the cellular mobile station includes a TTY element, such as a TTY modem, capable of communicating TTY-formatted data with the PSAP. The PSAP also includes TTY functionality; viz., the PSAP also includes a TTY modem, capable of exchanging TTY-formatted data with the cellular mobile station. Information contained in the message sent by the cellular mobile station to report on the occurrence of the vehicular emergency is displayable upon a monitor connected to the TTY modem of the PSAP. Appropriate dispatch of personnel is made in response to the vehicular emergency report.

Advantage is taken of the common usage of cellular mobile stations. Passengers in a vehicle carry cellular mobile stations that also have Bluetooth^{TM}, or other local area transceiver, capabilities. The vehicular-mounted local area transceiver searches for the presence of a cellular mobile station within proximity thereto. And, when a cellular mobile station having the local area transceiver capabilities is detected, its identity is stored and used to route a message in the event of the occurrence of a vehicular emergency. The message includes the identification of the vehicle, its location, such as provided by a GPS receiver, an indication of the type of emergency, and any other appropriate information. The cellular mobile station, in turn, alerts the PSAP of the vehicular emergency through operation of the TTY modem. The appropriate dispatch of emergency personnel to respond best to the vehicular emergency is carried out, all in response to an automatic generation and transmission of the vehicular emergency report.

In these and other aspects, therefore, apparatus, and an associated methodology, is provided for initiating communication of emergency data pursuant to a vehicular emergency. A paired transceiver detection initiation detector is adapted to detect occurrence of a vehicular trip start event. The paired transceiver detection initiation detector is configured to generate a paired transceiver search command responsive to the occurrence of the vehicular trip start event. A local transceiver is adapted to receive the paired transceiver search command generated by the paired transceiver detection initiation detector. The local transceiver is also adapted to receive indicia associated with the vehicle at which the local transceiver is positioned and to receive indication of occurrence of the vehicular emergency. The local transceiver is configured to perform a paired transceiver search responsive to the paired transceiver search command and to generate a vehicular emergency report responsive to the indication of the occurrence of the vehicular emergency.

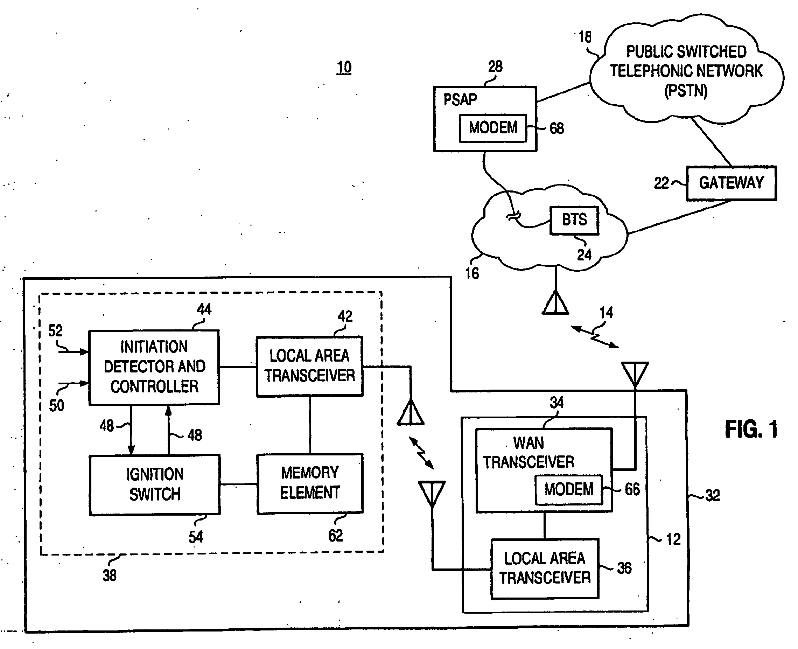

Referring first, therefore, to Figure 1, an exemplary communication system, shown generally at 10, provides for communications between communication endpoints, including mobile stations of which the mobile station 12 is representative. The mobile station 12 communicates by way of communication channels, here designated by the arrow 14, defined upon a radio air interface with a communication network, here formed of a radio access network 16 and a PSTN (Public Switched Telephonic Network) 18. The networks 16 and 18 are interconnected, in conventional manner, here by way of a gateway 22.

The radio access network is here shown to include a base transceiver station (BTS) 24 that includes transceiver elements that transceive communication signals with corresponding circuitry of the mobile station 12. In conventional manner, a typical radio access network includes a plurality of spaced-apart base transceiver stations that together encompass a geographical area over which communications by, and with, mobile stations are permitted. Any of various communication endpoints are connectable to the networks 16 and 18. Here, a PSAP (Public Safety Access Point) 28 is connected to the networks 16 and 18. The PSAP is defined at an emergency dispatch center that receives requests for emergency assistance, and, responsive to such requests, instructs emergency personnel to respond to such requests. The PSAP is, e.g., in the United States, a 911-center to which 911 emergency calls are routed. A call originated at a mobile station, such as the mobile station 12, is routable to the PSAP 28.

The mobile station 12 is representative of a mobile station carried by an occupant of a vehicle 32. That is to say, the mobile station 12 is carried by a user, and, when the user is positioned at the vehicle 32, the mobile station, carried by the user, is also positioned at the vehicle. When the user leaves the vehicle, the mobile station, if carried by the user, is also carried away from the vehicle. The mobile station 12 is not fixedly positioned at the vehicle but, rather, is likely to be positioned at the vehicle only temporarily.

The mobile station 12 includes a set of transceivers, a wide area network (WAN) transceiver 34, and a local area (LA) transceiver 36. The transceiver elements 34 and 36 are connected together in conventional manner. In the exemplary implementation, the wide area network transceiver forms a cellular transceiver capable of transceiving the communication signals that are received from, and transmitted to, the radio access network 16. And, the local area transceiver forms a Bluetooth^{TM} transceiver capable of sending and receiving signals over short ranges, e.g., on the order of thirty meters or less. The capacity of a mobile station, such as the mobile station 12, to communicate over a wide area using the transceiver element 34 and to communicate over a local area using the transceiver element 36 is used to advantage pursuant to an embodiment of the present invention.

Pursuant to an embodiment of the present invention, the vehicle 32 includes apparatus 38 of an embodiment of the present invention. The apparatus includes a local area transceiver 42, here also a Bluetooth™ transceiver. The transceiver, herein referred to as a vehicular-positioned transceiver for the reason that, in the exemplary implementation, the transceiver 42 is permanently maintained at the vehicle 32, is capable of communicating with the transceiver 36, or corresponding transceiver of another mobile station when positioned in the passenger compartment of the vehicle or is otherwise in proximity to the transceiver 42.

The apparatus 38 further includes an initiation detector and controller 44. The detector and controller comprises, for instance, an application executable by processing circuitry. The detector and controller is positioned in communication connectivity with the local area transceiver and, in the exemplary implementation, both exert control over its operation and provides indicia to the transceiver that is communicated during operation of the transceiver pursuant to an embodiment of the present invention. The detector and controller is provided input indicia, here represented by way of the lines 48, 50 and 52. The line 48 represents a line upon which a trip-start event indicia is provided to the detector and controller. The trip-start event indicia forms, for instance, an indication of an operator of the vehicle 32 turning an ignition switch to commence operation of the vehicle. And, here, the line 48 extends to the ignition switch 54, or electrical contacts thereof. When the operator of the vehicle turns a key in the ignition switch 54, an indication of the start of the vehicular engine is provided by way of the line 48 to the detector and controller 44.

The line 50 is representative of vehicular emergency indicia that is generated upon the occurrence of a vehicular emergency. The indicia is generated, for instance, upon deployment of safety airbags, upon detection of level sensors of upending of the vehicle, or other type of collision sensor indications that indicate collision of the vehicle.

And, the line 52 is representative of a line upon which vehicular identity information, such as a vehicle identification number (VIN) is provided to the detector and controller. The identifier identifies the vehicle, and when the identifier forms the VIN, the vehicle is uniquely identified.

In operation, upon detection of the trip start event, the detector and controller causes the local area transceiver 42 to commence searching operations to detect presence of one to many paired transceivers in proximity to the transceiver 42. The paired transceiver is a transceiver capable of communicating with the transceiver 42 and, here, the transceiver 36 forming a portion of the mobile station 12 defines a paired transceiver when the mobile station 12 is positioned in the passenger compartment of the vehicle or otherwise is positioned in proximity to the transceiver 42 of the apparatus 38.

In the exemplary implementation in which the transceivers 36 and 42 form Bluetooth™-compatible transceivers, interrogation and reply messages are generated, in conventional manner, in conformity with standard Bluetooth™ protocols. The transceiver 36 is identified, e.g., by an IP (Internet Protocol) address. Responsive to the search or inquiry by the transceiver 42, a reply message, containing the IP address of the transceiver 36 is returned to the transceiver 42. A memory element 62, connected to, or forming part of, the transceiver 42 is used to store the IP address, or other identifier, that identifies the transceiver 36. When a plurality of mobile stations 12 are positioned at the vehicle 32 or otherwise positioned in proximity to the transceiver 42, the identities of the plurality of mobile stations and indications thereof are stored at the memory element 62. The identities are ordered in an ordered list, according to any desired selection criteria, and the identities are accessed in the listed order.

In one implementation, subsequent to the initial search made by the transceiver 42, subsequent searches are made at periodic, or other, intervals so that the information stored at the memory element is timely. And, in the event that, responsive to a search, no mobile stations are determined to be at the vehicle 32 or otherwise in proximity thereto, subsequent searches are made at selected intervals to detect the presence of mobile stations subsequently in position in proximity to the transceiver 42.

In the absence of occurrence of a vehicular emergency, the detection of the trip start event and subsequent searching for transceivers in proximity to the vehicular-positioned transceiver 42 is repeated each time that a trip start event is detected. Upon the occurrence of a vehicular emergency, indication of its occurrence is provided to the detector and controller 44 by way of the line 52. And, the detector and controller alerts the vehicular-positioned transceiver 42 of the occurrence. In response, the transceiver 42 is caused to generate a message that is communicated to the transceiver 36 whose identity is stored at the memory element 62. That is to say, the contents of the memory element are retrieved in order to identity to where to route a message that is generated by the vehicular-positioned transceiver.

Once ascertained, the memory contents are used to address the message and the message is populated with indications of the vehicular emergency together with the identity of the vehicle. The message is sent and delivered to the identified transceiver, here the transceiver 36. Information contained in the message is utilized pursuant to a request made by the wide area network transceiver 34 to the PSAP 28.

In the exemplary implementation, the transceiver 34 includes a TTY modem 66 capable of transmitting TTY-formatted data. The PSAP 28 also includes a TTY modem, designated at 68, also capable of communicating TTY-formatted data. Subsequent to conventional call set-up with the PSAP, in the exemplary implementation, the information associated with the vehicular emergency is communicated by way of the TTY modems. The call is placed automatically, and the information is communicated automatically, without need for user interaction. In the event that the occupants of the vehicle are unable to place a call for emergency assistance or provide other information, the information needed to alert the PSAP and the personnel thereat of the occurrence of the vehicular emergency is automatically provided.

According to the invention, indicia provided to the detector and controller also includes GPS (Global Positioning System) positioning information, and such positioning information is included in the message generated by the local area transceiver 42 and is communicated to the PSAP. Personnel at the emergency dispatch center at which the PSAP is positioned are able to respond to the exact location at which the vehicular emergency has occurred.

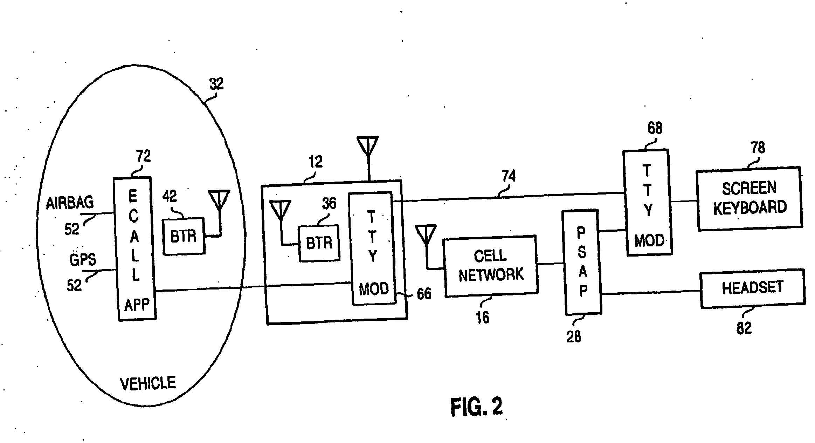

Figure 2 illustrates a representation of various of the elements shown in the communication system of Figure 1. Again, the vehicle 32 is shown at which the vehicular-positioned transceiver 42 is located. The transceiver is positioned in communication connectivity with an e-call application 72 that forms the initiation detector and controller 44, shown in Figure 1, in the exemplary implementation. Lines 52 extending to the application 72 provide indication of deployment of an airbag and GPS information.

As noted previously, upon the occurrence of the vehicular emergency, the information associated with the vehicular emergency is communicated to a mobile station 12 by way of the paired transceiver 36 paired with the transceiver 42. And, the information is provided to the TTY modem 66 forming part of the wide area network transceiver of the mobile station.

A call is automatically placed by the mobile station to the PSAP by way of the network 16. And, the modem 68 of the PSAP is placed in communication connectivity, here indicated by way of the lines 74, with the modem 66. Information, in textual form, is communicated to the TTY modem 68 and subsequently displayed upon a screened keyboard 78. A headset 82 is also positioned at the PSAP to permit an operator positioned thereat to receive calls placed to the PSAP.

Any of various pertinent information is provided in the form of textual data including the GPS coordinates, the vehicle orientation, deployment of airbags, and, if so, which of the airbags are deployed, the VIN of the vehicle, a time stamp of the accident, as well as service provider identifications, e.g., the cellular operator through which the call was placed. Data is also communicated, if needed, by the modem 68 to the modem 66, e.g., to communicate requests for further information. By including the identity of the vehicle, by way of its VIN or other identifier, the identity of the vehicle is validated.

Here, when a determination is made to make an e-call, the application uses the default cell phone known to be in proximity of the vehicle. Knowledge of the proximity is made pursuant to a search procedure initiated, e.g., by the vehicle operator's turning of an ignition key, starting of the engine, actuation of an actuator, etc. Responsive to the search, a paired transceiver, if any, positioned in proximity to the vehicular-positioned transceiver is detected. A record is maintained of the detected transceiver, and in the event of a vehicular emergency, the identity of the detected transceiver is used pursuant to an emergency call. If the identified transceiver is unavailable, a message is attempted to be communicated to another transceiver, if any. If no other transceivers are recorded to be available, a new search is undertaken to detect for its presence.

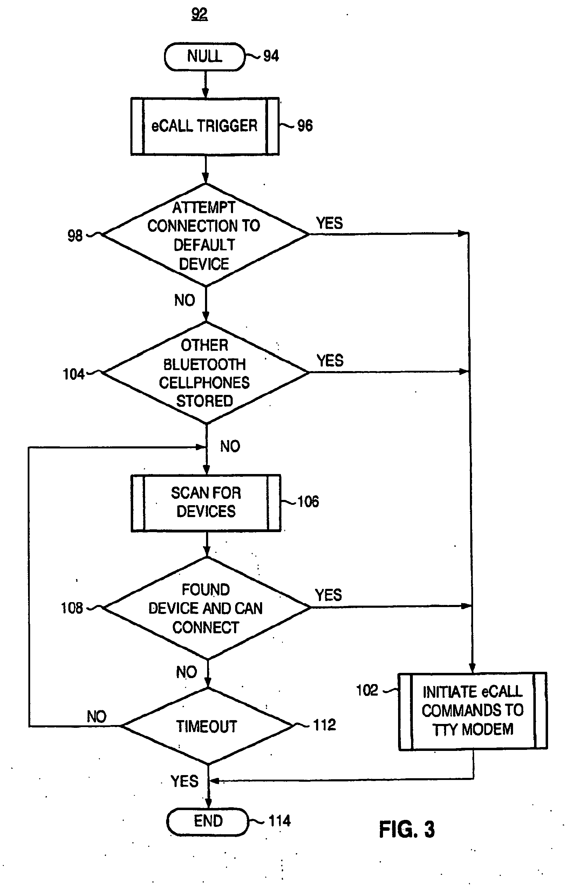

Figure 3 illustrates a process diagram, shown generally at 92, representative of the present invention. After entry at the null state 94, a path is taken to the block 96 at which an e-call is triggered responsive to the occurrence of a vehicular emergency.

A path is taken to the decision block 98 and at which an attempt is made to connect to a default device, i.e., a paired transceiver determined to be in proximity to the vehicular-positioned transceiver. If a connection is made, the yes branch is taken to the block 102, and an emergency call is initiated, including commands given to a TTY modem.

If, conversely, the attempt to connect to the default device is unsuccessful, the no branch is taken from the decision block 98 to the decision block 104. If the identity of another paired transceiver is available, the yes branch is again taken to the block 102 and the emergency call is initiated. If, conversely, no other identities are stored, the no branch is taken from the decision block 104 to the block 106 and a scan is made to search for available, paired transceivers.

Then, and as indicated by the decision block 108, a determination is made whether an alternate transceiver is located. If so, the yes branch is taken to the block 102. Otherwise, the no branch is taken to the block 112, and a determination is made as to whether a timeout period has timed out. If not, the no branch is taken back to the block 106 and the procedure continues. If, conversely, the timeout period has timed out, the yes branch is taken to the end block 114. A branch is also taken upon conclusion of the block 102 to the end block 114.

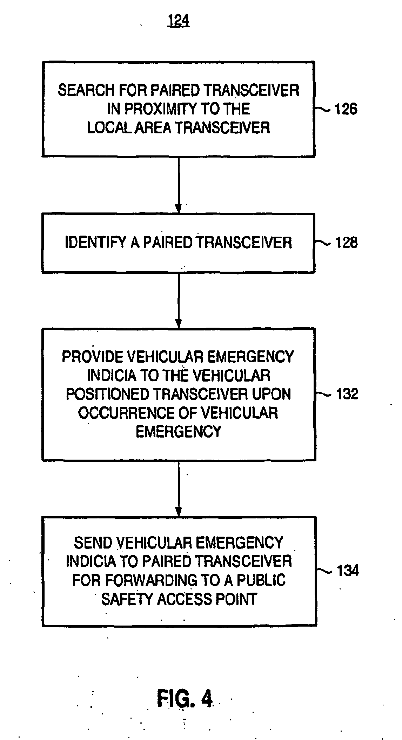

Figure 4 illustrates a method flow diagram, shown generally at 124, representative of the method of operation of an embodiment of the present invention. The method facilitates communication of emergency data pursuant to a vehicular emergency.

First, and as indicated by the block 126, a paired transceiver search is performed by a vehicular-positioned local transceiver to identify a paired transceiver in proximity to the vehicular-positioned local transceiver. Then, and as indicated by the block 128, a paired transceiver is identified responsive to the paired transceiver search.

And, as indicated by the block 132, vehicular emergency indicia is provided to the vehicular-positioned transceiver upon occurrence of the vehicular emergency. Then, and as indicated by the block 134, the vehicular emergency indicia is sent to the paired transceiver for forwarding on to a public safety access point.

Thereby, upon occurrence of a vehicular emergency, a report of the vehicular emergency is automatically made, taking advantage of the availability of a mobile station positioned in proximity to the vehicle at which the vehicular emergency has occurred.

The scope of the present invention is defined by the following claims.

## Claims

1. Vehicular-positioned apparatus (38) for initiating communication of emergency data to a public safety access point PSAP pursuant to a vehicular emergency, said apparatus (38) comprising:
a paired transceiver detection initiation detector (44) adapted to detect occurrence of a vehicular trip start event, said paired transceiver detection initiation detector configured to generate a paired-transceiver search command responsive to the occurrence of the vehicular trip start event:
a local area transceiver (42) adapted to: receive the paired transceiver search command generated by said paired transceiver detection initiation detector (44); to receive indicia including Global Positioning System GPS information, associated with the vehicle (32) at which said local area transceiver (42) is positioned; and to receive indication of occurrence of a vehicular emergency,
a memory element (62) said local area transceiver (42) further configured to: perform a paired-transceiver search, responsive to the paired transceiver search command, to detect presence of a plurality of paired local area transceivers (36) in proximity to the local area transceiver (42), store identities of the paired local area transceivers (36) in an ordered list in the memory element (62), upon the receipt of the indication of occurrence of a vehicular emergency, attempt connection to a first paired transceiver (36) in the ordered list and if the connection is not available attempt connection to a second paired transceiver (36) in the ordered list; if connection to none of the paired transceivers (36) in the ordered list can be made, perform a paired-transceiver search; when connection to a paired transceiver (36) is made, generate a message addressed to the connected paired-transceiver (36) populated with indications of the vehicular emergency together with the identity of the vehicle and the GPS information responsive to the indication of the occurrence of the vehicular emergency, said message including commands for a text telephony TTY modem forming part of a wide area network transceiver (34) included in a mobile station (12) comprising the connected paired transceiver (36) to automatically forward information contained in said message to the PSAP in TTY-format without need for user interaction; and send said message to the first available paired transceiver identified in the ordered list.

2. The vehicular-positioned apparatus of claim 1 wherein the vehicular trip start event of which the occurrence thereof said paired transceiver detection detector is adapted to detect comprises turning of a vehicular ignition switch.

3. The apparatus of claim 1 wherein the vehicular trip start event of which the occurrence thereof said paired transceiver detection detector is adapted to detect comprises user actuation of a vehicular mounted actuator.

4. The apparatus of claim 1 wherein the pair transceiver search performed by said local transceiver is performed successively at selected intervals responsive to reception of the paired transceiver search.

5. The apparatus of claim 1 wherein the identifiers that identify a paired transceiver comprise an IP (Internet Protocol)-formatted address.

6. The apparatus of claim 1 wherein said local transceiver comprises a Bluetooth™-capable transceiver.

7. The apparatus of claim 1 wherein the indicia associated with the vehicle that said local transceiver is adapted to receive comprises a vehicular identification number that uniquely identifies the vehicle.

8. The apparatus of claim 1 wherein the indication of the vehicular emergency that said local transceiver is adapted to receive comprises an indication that identifies which type of vehicular emergency has occurred.

9. A method for facilitating communication of emergency data to a public safety access point PSAP pursuant to a vehicular emergency, said method comprising the operations of:
detecting occurrence of a vehicular trip start event;
performing a paired transceiver search by a vehicular-positioned local area transceiver (42) to identify a plurality of paired local area transceivers (36) in proximity to the vehicular-positioned local area transceiver (42);
storing the identities of the identified paired local area transceivers (36) in an ordered list;
receiving indicia, including Global Positioning System /GPS/ information, associated with the vehicle (32) at which said vehicular-positioned local area transceiver (42) is positioned;
receiving indication of occurrence of a vehicular emergency;
upon receipt of the indication of occurence of a vehicular emergency, attempting connection to a first paired transceiver of the plurality of paired transceivers in the ordered list and if the connection is not available attempting connection to a second paired transceiver of the plurality of paired transceivers in the ordered list;
if connection to none of the paired transceivers in the ordered list can be made, performing a paired-transceiver search;
when connection to a paired transceiver is made, generating a message addressed to the connected paired transceiver populated with indications of the vehicle emergency together with the identity of the vehicle and the GPS information; and
sending said message including commands for a text telephony forming part of a wide area network transceiver (34) included in a mobile station (12) comprising the connected TTY modem paired transceiver for automatically forwarding information contained in said message to the PSAP in TTY format without need for user interaction.

10. The method of claim 9 wherein the vehicular-positioned transceiver comprises a Bluetooth™-compatible transceiver and wherein said operation of performing the paired transceiver search comprises performing a search for a Bluetooth™-compatible transceiver.

11. The method of claim 10 wherein the paired transceiver identified during said operation of identifying comprise cellular radio transceiver having a Bluetooth™-capable part.

## Patentansprüche

1. In einem Fahrzeug positionierte Vorrichtung (38) zum Initiieren einer Kommunikation von Notfalldaten an einen PSAP (Public Safety Access Point) bzw. eine Notfallleitstelle entsprechend einer Notsituation eines Fahrzeugs, wobei die Vorrichtung (38) aufweist:
einen "zugeordneter Transceiver"-Erfassungs-Initiierungs-Detektor (44), der ausgebildet ist zum Erfassen eines Auftretens eines Fahrtbeginnereignisses des Fahrzeugs, wobei der "zugeordneter Transceiver"-Erfassungs-Initiierungs-Detektor konfiguriert ist zum Erzeugen eines "zugeordneter Transceiver"-Suchbefehls in Reaktion auf das Auftreten des Fahrtbeginnereignisses des Fahrzeugs;
einen Lokalbereichs-Transceiver (42), der ausgebildet ist zum: Empfangen des "zugeordneter Transceiver"-Suchbefehls, der von dem "zugeordneter Transceiver"-Erfassungs-Initiierungs-Detektor (44) erzeugt wird; Empfangen von Indicia, einschließlich GPS(Global Positioning System)-Information, die mit dem Fahrzeug (32) assoziiert ist, an dem der Lokalbereichs-Transceiver (42) positioniert ist; und Empfangen einer Anzeige eines Auftretens einer Notsituation eines Fahrzeugs;
ein Speicherelement (62);
wobei der Lokalbereichs-Transceiver (42) weiter konfiguriert ist zum:
Durchführen einer "zugeordneter Transceiver"-Suche in Reaktion auf den "zugeordneter Transceiver"-Suchbefehl, um ein Vorhandensein einer Vielzahl von zugeordneten Lokalbereichs-Transceivern (36) in der Nähe des Lokalbereichs-Transceivers (42) zu erfassen; Speichern von Identitäten der zugeordneten Lokalbereichs-Transceiver (36) in einer geordneten Liste in dem Speicherelement (62); bei Empfang der Anzeige eines Auftretens einer Notsituation des Fahrzeugs, Versuchen einer Verbindung zu einem ersten zugeordneten Transceiver (36) in der geordneten Liste und wenn die Verbindung nicht verfügbar ist, Versuchen einer Verbindung zu einem zweiten zugeordneten Transceiver (36) in der geordneten Liste; wenn keine Verbindung zu einem der zugeordneten Transceiver (36) in der geordneten Liste hergestellt werden kann, Durchführen einer "zugeordneter Transceiver"-Suche; wenn eine Verbindung zu einem zugeordneten Transceiver (36) hergestellt wird, Erzeugen einer Nachricht, die an den verbundenen zugeordneten Transceiver (36) adressiert ist und mit Angaben zu der Notsituation des Fahrzeugs zusammen mit der Identität des Fahrzeugs und der GPS-Information versehen ist, in Reaktion auf die Anzeige des Auftretens der Notsituation des Fahrzeugs, wobei die Nachricht Befehle für ein TTY(text telephony)-Modem umfasst, das einen Teil eines Weitbereichsnetzwerk-Transceivers (34) bildet, der in einer mobilen Station (12) enthalten ist, die den verbundenen zugeordneten Transceiver (36) aufweist, um automatisch Information, die in der Nachricht enthalten ist, an den PSAP in einem TTY-Format weiterzuleiten ohne der Notwendigkeit einer Benutzerinteraktion; und Senden der Nachricht an den ersten verfügbaren zugeordneten Transceiver, der in der geordneten Liste identifiziert wird.

2. In einem Fahrzeug positionierte Vorrichtung gemäß Anspruch 1, wobei das Fahrtbeginnereignis des Fahrzeugs, dessen Auftreten der "zugeordneter Transceiver"-Erfassungs-Detektor ausgebildet ist zu Erfassen, ein Umdrehen eines Zündschalters des Fahrzeugs aufweist.

3. Vorrichtung gemäß Anspruch 1, wobei das Fahrtbeginnereignis des Fahrzeugs, dessen Auftreten der "zugeordneter Transceiver"-Erfassungs-Detektor ausgebildet ist zu Erfassen, eine Benutzerbetätigung eines in dem Fahrzeug angebrachten Aktuators aufweist.

4. Vorrichtung gemäß Anspruch 1, wobei die "zugeordneter Transceiver"-Suche, die von dem lokalen Transceiver durchgeführt wird, sukzessive an ausgewählten Intervallen durchgeführt wird in Reaktion auf einen Empfang der "zugeordneter Transceiver"-Suche.

5. Vorrichtung gemäß Anspruch 1, wobei die Identifizierer, die einen zugeordneten Transceiver identifizieren, eine IP(Internet Protocol)-formatierte Adresse aufweisen.

6. Vorrichtung gemäß Anspruch 1, wobei der lokale Transceiver einen Bluetooth™-fähigen Transceiver aufweist.

7. Vorrichtung gemäß Anspruch 1, wobei die Indicia, die mit dem Fahrzeug assoziiert sind, die der lokale Transceiver ausgebildet ist zu empfangen, eine Identifikationsnummer des Fahrzeugs aufweisen, die das Fahrzeug eindeutig identifiziert.

8. Vorrichtung gemäß Anspruch 1, wobei die Anzeige der Notsituation des Fahrzeugs, die der lokale Transceiver ausgebildet ist zu empfangen, eine Anzeige aufweist, die identifiziert, welcher Typ einer Fahrzeug-Notsituation stattgefunden hat.

9. Verfahren zum Erleichtern einer Kommunikation von Notfalldaten an einen PSAP (Public Safety Access Point) bzw. eine Notfallleitstelle entsprechend einer Notsituation eines Fahrzeugs, wobei das Verfahren die Operationen aufweist:
Erfassen eines Auftretens eines Fahrtbeginnereignisses des Fahrzeugs;
Durchführen einer "zugeordneter Transceiver"-Suche durch einen an dem Fahrzeug positionierten Lokalbereichs-Transceiver (42), um eine Vielzahl von zugeordneten Lokalbereichs-Transceivern (36) in der Nähe des an dem Fahrzeug positionierten Lokalbereichs-Transceivers (42) zu erfassen, Speichern der Identitäten der identifizierten zugeordneten Lokalbereichs-Transceiver (36) in einer geordneten Liste;
Empfangen von Indicia, einschließlich GPS(Global Positioning System)-Information, die mit dem Fahrzeug (32) assoziiert ist, an dem der an dem Fahrzeug positionierte Lokalbereichs-Transceiver (42) positioniert ist;
Empfangen einer Anzeige eines Auftretens einer Notsituation eines Fahrzeugs;
bei Empfang der Anzeige eines Auftretens einer Notsituation des Fahrzeugs, Versuchen einer Verbindung zu einem ersten zugeordneten Transceiver der Vielzahl von zugeordneten Transceivern in der geordneten Liste und wenn die Verbindung nicht verfügbar ist, Versuchen einer Verbindung zu einem zweiten zugeordneten Transceiver der Vielzahl von zugeordneten Transceivern in der geordneten Liste;
wenn keine Verbindung zu einem der zugeordneten Transceiver in der geordneten Liste hergestellt werden kann, Durchführen einer "zugeordneter Transceiver"-Suche;
wenn eine Verbindung zu einem zugeordneten Transceiver hergestellt wird, Erzeugen einer Nachricht, die an den verbundenen zugeordneten Transceiver adressiert ist und mit Angaben zu der Notsituation des Fahrzeugs zusammen mit der Identität des Fahrzeugs und der GPS-Information versehen ist; und
Senden der Nachricht, einschließlich Befehlen für ein TTY(text telephony)-Modem, das einen Teil eines Weitbereichsnetzwerk-Transceivers (34) bildet, der in einer mobilen Station (12) enthalten ist, die den verbundenen zugeordneten Transceiver aufweist, um automatisch Information, die in der Nachricht enthalten ist, an den PSAP in einem TTY-Format weiterzuleiten ohne der Notwendigkeit einer Benutzerinteraktion.

10. Verfahren gemäß Anspruch 9, wobei der an dem Fahrzeug positionierte Transceiver einen Bluetooth™-kompatiblen Transceiver aufweist und wobei die Operation des Durchführens der "zugeordneter Transceiver"-Suche aufweist ein Durchführen einer Suche nach einem Bluetooth™-kompatiblen Transceiver.

11. Verfahren gemäß Anspruch 10, wobei der zugeordnete Transceiver, der während der Operation des Identifizierens identifiziert wird, einen zellularen Funk-Transceiver mit einem Bluetooth™-fähigen Teil aufweist.

## Revendications

1. Appareil implanté à bord d'un véhicule (38), destiné à lancer la communication de données d'urgence vers un point d'accès de sécurité publique, PSAP, à la suite d'une situation d'urgence intéressant le véhicule, ledit appareil (38) comprenant :
un détecteur de lancement de la détection d'émetteurs-récepteurs appariés (44) conçu pour détecter l'occurrence d'un événement de début de déplacement du véhicule, ledit détecteur de lancement de la détection d'un émetteur-récepteur apparié étant configuré pour produire une instruction de recherche d'émetteurs-récepteurs appariés en réponse à l'occurrence de l'événement de début de déplacement du véhicule ;
un émetteur-récepteur de réseau local (42) conçu pour : recevoir l'instruction de recherche d'émetteurs-récepteurs appariés produite par ledit détecteur de lancement de la détection d'émetteurs-récepteurs appariés (44) ; recevoir des données d'identification, comprenant des informations GPS, associées au véhicule (32) dans lequel est implanté ledit émetteur-récepteur de réseau local (42) ; et recevoir une indication de l'occurrence d'une situation d'urgence intéressant le véhicule ;
un élément de mémoire (62) ;
ledit émetteur-récepteur de réseau local (42) étant en outre configuré pour : effectuer une recherche d'émetteurs-récepteurs appariés en réponse à l'instruction de recherche d'émetteurs-récepteurs appariés, afin de détecter la présence d'une pluralité d'émetteurs-récepteurs de réseau local appariés (36) à proximité de l'émetteur-récepteur de réseau local (42) et de stocker les identités des émetteurs-récepteurs de réseau local appariés (36) dans une liste ordonnée dans l'élément de mémoire (62) ; après réception de l'indication d'occurrence de la situation d'urgence intéressant le véhicule, tenter la connexion avec un premier émetteur-récepteur apparié (36) dans la liste ordonnée et, si la connexion n'est pas disponible, tenter la connexion avec un second émetteur-récepteur apparié (36) dans la liste ordonnée ; si la connexion ne peut être établie avec aucun des émetteurs-récepteurs appariés (36) dans la liste ordonnée, exécuter une recherche d'émetteurs-récepteurs appariés ; lorsque la connexion est établie avec un émetteur-récepteur apparié (36), produire un message adressé à l'émetteur-récepteur apparié (36) connecté, contenant des indications sur la situation d'urgence intéressant le véhicule, ainsi que l'identité du véhicule et les informations GPS, en réponse à l'indication de l'occurrence de la situation d'urgence intéressant le véhicule, ledit message contenant des instructions destinées à un modem de télétypie, TTY, faisant partie d'un émetteur-récepteur de réseau étendu (34) inclus dans une station mobile (12) comprenant l'émetteur-récepteur apparié (36) connecté, afin qu'il achemine automatiquement dans un format TTY des informations contenues dans ledit message vers le point PSAP, sans nécessiter d'interaction de l'utilisateur ; et envoyer ledit message au premier émetteur-récepteur apparié disponible qui a été identifié dans la liste ordonnée.

2. Appareil implanté à bord d'un véhicule selon la revendication 1, dans lequel l'événement de début de déplacement du véhicule, dont ledit détecteur de détection d'émetteurs-récepteurs appariés est conçu pour détecter l'occurrence, est constitué de la rotation du contacteur d'allumage du véhicule.

3. Appareil implanté à bord d'un véhicule selon la revendication 1, dans lequel l'événement de début de déplacement du véhicule, dont ledit détecteur de détection d'émetteurs-récepteurs appariés est conçu pour détecter l'occurrence, est constitué de l'actionnement par l'utilisateur d'un actionneur monté sur le véhicule.

4. Appareil implanté à bord d'un véhicule selon la revendication 1, dans lequel la recherche d'émetteurs-récepteurs appariés exécutée par ledit émetteur-récepteur local est effectuée successivement à des intervalles sélectionnés, en réponse à la réception de la recherche d'émetteurs-récepteurs appariés.

5. Appareil selon la revendication 1, dans lequel les identificateurs qui identifient un émetteur-récepteur apparié comprennent une adresse formatée IP (Protocole internet).

6. Appareil selon la revendication 1, dans lequel ledit émetteur-récepteur local est constitué d'un émetteur-récepteur capable d'offrir les fonctions Bluetooth™.

7. Appareil selon la revendication 1, dans lequel les données d'identification associées au véhicule, que ledit émetteur-récepteur local est conçu pour recevoir, comprennent un numéro d'identification du véhicule qui identifie le véhicule de manière univoque.

8. Appareil selon la revendication 1, dans lequel l'indication d'une situation d'urgence intéressant le véhicule, que ledit émetteur-récepteur local est conçu pour recevoir, comprend une indication qui identifie quel est le type de situation d'urgence intéressant le véhicule qui s'est produite.

9. Procédé destiné à faciliter la communication de données d'urgence à un point d'accès de sécurité publique, PSAP, à la suite d'une situation d'urgence intéressant le véhicule, ledit procédé comprenant les étapes consistant à :
détecter l'occurrence d'un événement de début de déplacement du véhicule ;
effectuer une recherche d'émetteurs-récepteurs appariés au moyen d'un émetteur-récepteur de réseau local (42) implanté à bord du véhicule afin d'identifier une pluralité d'émetteurs-récepteurs de réseau local appariés (36) à proximité de l'émetteur-récepteur de réseau local (42) implanté à bord du véhicule ;
stocker dans une liste ordonnée les identités des émetteurs-récepteurs de réseau local appariés (36) qui ont été identifiés ;
recevoir des données d'identification, y compris des informations GPS, associées au véhicule (32) à bord duquel est implanté ledit émetteur-récepteur de réseau local (42) implanté à bord du véhicule ;
recevoir des indications sur l'occurrence d'une situation d'urgence intéressant le véhicule ;
après réception d'une indication d'occurrence d'une situation d'urgence intéressant le véhicule, tenter la connexion avec un premier émetteur-récepteur apparié dans la pluralité d'émetteurs-récepteurs appariés dans la liste ordonnée et, si la connexion n'est pas disponible, tenter une connexion avec un second émetteur-récepteur apparié dans la pluralité d'émetteurs-récepteurs appariés dans la liste ordonnée ;
si la connexion ne peut être établie avec aucun des émetteurs-récepteurs appariés de la liste ordonnée, effectuer une recherche d'émetteurs-récepteurs appariés ;
lorsque la connexion est établie avec un émetteur-récepteur apparié, produire un message adressé à l'émetteur-récepteur apparié connecté, contenant des indications sur la situation d'urgence intéressant le véhicule, ainsi que l'identité du véhicule et les informations GPS ; et
envoyer ledit message contenant des instructions destinées à un modem de télétypie, TTY, faisant partie d'un émetteur-récepteur de réseau étendu (34) inclus dans une station mobile (12) comprenant l'émetteur-récepteur apparié (36) connecté, afin qu'il achemine automatiquement dans un format TTY des informations contenues dans ledit message vers le point PSAP, sans nécessiter d'interaction de l'utilisateur.

10. Procédé selon la revendication 9, dans lequel l'émetteur-récepteur implanté à bord du véhicule est constitué d'un émetteur-récepteur compatible Bluetooth™ et dans lequel ladite opération d'exécution de la recherche d'émetteurs-récepteurs appariés comprend l'opération consistant à rechercher un émetteur-récepteur compatible Bluetooth™_{.}

11. Procédé selon la revendication 10, dans lequel l'émetteur-récepteur apparié identifié dans ladite étape d'identification est constitué d'un émetteur-récepteur cellulaire radio comprenant une partie offrant des fonctions Bluetooth™.
